Europäisches Patentamt

European Patent Office

Office européen des brevets

(19)

(11)     EP 1 734 705 A2

(12)     **EUROPEAN PATENT APPLICATION**

(43) Date of publication:
    **20.12.2006 Bulletin 2006/51**

(51) Int Cl.:
    ***H04L 12/56*** *(2006.01)*

(21) Application number: **06012536.6**

(22) Date of filing: **19.06.2006**

(84) Designated Contracting States:
    **AT BE BG CH CY CZ DE DK EE ES FI FR GB GR HU IE IS IT LI LT LU LV MC NL PL PT RO SE SI SK TR**
    Designated Extension States:
    **AL BA HR MK YU**

(30) Priority: **18.06.2005 KR 20050052764**

(71) Applicant: **Samsung Electronics Co., Ltd.
Suwon-si, Gyeonggi-Do (KR)**

(72) Inventors:
- **Cho, Jae-Weon
  Yeongtong-gu
  Suwon-si
  Gyeonggi-do (KR)**
- **Kang, Hyun-Jeong
  Yeongtong-gu
  Suwon-si
  Gyeonggi-do (KR)**
- **Joo, Pan-Yuh
  Yeongtong-gu
  Suwon-si
  Gyeonggi-do (KR)**
- **Son, Jung-Je
  Yeongtong-gu
  Suwon-si
  Gyeonggi-do (KR)**

- **Lim, Hyoung-Kyu
  Yeongtong-gu
  Suwon-si
  Gyeonggi-do (KR)**
- **Lee, Sung-Jin
  Yeongtong-gu
  Suwon-si
  Gyeonggi-do (KR)**
- **Lee, Mi-Hyun
  Yeongtong-gu
  Suwon-si
  Gyeonggi-do (KR)**
- **Son, Yeong-Moon
  Yeongtong-gu
  Suwon-si
  Gyeonggi-do (KR)**
- **Lee, Geun-Ho
  Yeongtong-gu
  Suwon-si
  Gyeonggi-do (KR)**

(74) Representative: **Grünecker, Kinkeldey,
Stockmair & Schwanhäusser
Anwaltssozietät
Maximilianstrasse 58
80538 München (DE)**

(54)     **Routing apparatus and method in a multi-hop relay cellular network**

(57)     Provided is a routing method in a multi-hop relay cellular network including a Mobile Station (MS), a Base Station (BS), and at least one Relay Station (RS). At least one of RS neighboring the MS measures quality of a link to the BS, generates link quality information using the measured link quality, and transmits the link quality information to the MS. The MS receives the link quality information from the RSs, selects an optimal path depending on the received link quality information, and transmits information on the selected optimal path to the BS.

FIG.1A

EP 1 734 705 A2

**Description**

**BACKGROUND OF THE INVENTION**

1. Field of the Invention

The present invention relates generally to a multi-hop relay cellular network, and in particular, to a routing apparatus and method for selecting an optimal path while minimizing a message load in a multi-hop relay cellular network.

2. Description of the Related Art

These days, many people carry a number of digital portable electronic devices such as a notebook computer, a mobile phone, a Personal Digital Assistant (PDA), and a MPEG layer 3 (MP3) player. For convenience, the digital portable electronic devices will hereinafter be referred to as a Mobile Station (MS). Most of the MSs independently operate without interworking therebetween. Therefore, if the MSs can construct a wireless network by themselves without the assistance of a central control system, they can simply share a variety of information with each other. The use of these functions can contribute to providing new and various information communication services.

A wireless network that helps MSs perform communication with each other anytime and anyplace without the assistance of the central control system is called an Ad-hoc network or ubiquitous network. In the Ad-hoc network system, each of the MSs independently exists in space and connects with all other MSs located in its service coverage area, making a network. Herein, each of the MSs can be a server or a hub therebetween, or can also serve as a client.

In the latest mobile communication system, research is being conducted on the 4th generation (4G) mobile communication system as a useful scheme for high-speed data transmission in wire/wireless channels. One of the most important requirements in the 4G mobile communication system is a configuration of a self-adaptable wireless network. The self-adaptable wireless network is constructed such that it is self-adaptable to a wireless network without control of the central control system and can also be controlled on a distributed basis, thereby providing mobile communication service.

Generally, in the 4G mobile communication system, cells with a short radius should be deployed in order to enable high-speed communication and accommodate heavy traffic. However, such system design is impossible with the current wireless network design scheme, i.e., the centralized scheme. Therefore, the wireless network should be able to actively cope with a change in the environment by building a distributed control system and adding new Base Stations (BSs). For the foregoing reasons, there is a need for a construction of a self-adaptable wireless network in the 4G mobile communication system.

In order to actually realize the self-adaptable wireless network required in the 4G mobile communication system, the technology applied in the Ad-hoc network should be introduced to the mobile communication system. A typical example thereof is a multi-hop relay cellular network. The multi-hop relay cellular network introduces a multi-hop relay scheme, which is the technology applied in the Ad-hoc network, to a cellular network composed of fixed BSs. In the cellular network, because communication between a BS and a MS is achieved through one direct link, a wireless communication link with high reliability can be readily constructed between the BS and the MS.

However, in the cellular network, a position of the BS is fixed. Therefore, in the wireless environment where there is a rapid change in traffic distribution and traffic quantity due to low configuration flexibility of the wireless network, the cellular network has difficulty in efficiently providing services. In order to make up for its defects, the cellular network employs a relay technique that delivers data in a multi-hop fashion using several surrounding MSs or fixed Relay Stations (RSs). This scheme can rapidly reconfigure the network in response to a change in the surrounding environment, and can efficiently manage the entire wireless network. Therefore, the self-adaptable wireless network required in the 4G mobile communication system can be actually realized, modeling after the multi-hop relay cellular network.

Another reason why the multi-hop relay technology is introduced in the cellular network is that the multi-hop relay technology can broaden the cell coverage and increase the system capacity. That is, by forming a multi-hop relay path to an MS having a bad channel quality for the channel from a BS through an RS, it is possible to provide a wireless channel with a good channel quality. Therefore, the use of the multi-hop relay technique in the shadow area suffering a serious shielding phenomenon by buildings can provide efficient communication services. In addition, the use of the multi-hop relay technique in the area where the channel from the BS has a bad channel quality can provide a higher-speed data channel and can extend the cell coverage.

Meanwhile, one of the most important technologies in the multi-hop relay cellular network is routing technology. The routing technology refers to the technology for selecting the optimal path (or optimal route) among a plurality of multi-hop paths between a BS and an MS. Generally, in the multi-hop relay cellular network, the BS determines the optimal path. This is because the BS takes charge of almost all control in the cell. On the contrary, in the Ad-hoc network where all nodes such as the RS or MS constitute a network in a self-adaptable fashion, each of the nodes can determine a path by itself with the assistance of its neighbor nodes.

Therefore, because the multi-hop relay cellular network is different from the Ad-hoc network in terms of selecting the optimal path, many routing technologies proposed or researched for the Ad-hoc network cannot be used for the multi-hop relay cellular network.

The routing technology in the multi-hop relay cellar network can be roughly divided into three phases. In a first phase, an MS recognizes its neighbor RS. In a second phase, the quality of a link between the recognized RS and the MS (RS-MS link) is reported to a BS. In a third phase, the BS determines an optimal BS-RS-MS path based on the reported quality value.

In the first phase, in order for the MS to recognize neighbor RSs, i.e., in order to allow the MS to recognize the neighbor RSs, RSs neighboring the MS can transmit a specific control signal, for example, a pilot sequence or a preamble sequence, to the MS. Then the MS can estimate the quality of an RS-MS link by measuring a Received Signal Strength Indicator (RSSI) or Signal-to-Interference and Noise Ratio (SINR) of the control signals transmitted from the neighbor RSs.

As described above, in the multi-hop relay cellular network, the routing technology greatly affects the system performance. That is, the optimal BS-MS path is correctly selected in order to maximize performance of the multi-hop relay cellular network.

However, in order to select the optimal path to each MS, the BS should be aware of the link qualities between the MS and all neighbor RSs. If multiple RSs are located in the vicinity of each MS, the MS should report information on all of the RSs to the BS. In this case, the amount of the information that the MS reports to the BS may be very large. In addition, for a moving MS, the link quality may vary with the passage of time, so the MS should report the neighbor RS information to the BS at predetermined intervals. Moreover, in the system using Mobile Relay Stations (MRSs), the change in link quality may be more considerable. In this case, therefore, a report period to the BS should be reduced. In conclusion, an MS-BS uplink load for neighbor RS information report from the MS to the BS considerably increases.

To date, there has been no proposed routing technology capable of selecting the optimal path while minimizing a message load in the multi-hop relay cellular network. That is, although a great deal of research has been conducted on a routing algorithm for the Ad-hoc network, the routing technology of the Ad-hoc network cannot be intactly applied to the multi-hop relay cellular network as stated above.

Accordingly, taking into account the fact that the routing technology greatly affects the multi-hop relay cellular network, there is a need for a routing technology capable of meeting the two requirements, i.e., selection the optimal path while minimizing the message load.

## SUMMARY OF THE INVENTION

It is, therefore, an object of the present invention to provide a routing apparatus and method for selecting an optimal path while minimizing a message load in a multi-hop relay cellular network.

It is another object of the present invention to provide a routing apparatus and method for selecting an optimal path while minimizing the amount of information on neighbor RSs, reported to a BS by an MS, in a multi-hop relay cellular network.

It is further another object of the present invention to provide a routing apparatus and method for maximizing a data rate in a multi-hop relay cellular network.

It is yet another object of the present invention to provide a routing apparatus and method for reducing a load of an MS or an RS in a multi-hop relay cellular network.

It is still another object of the present invention to provide a routing apparatus and method for minimizing power consumption of an MS or an RS in a multi-hop relay cellular network.

According to one aspect of the present invention, there is provided a routing method in a multi-hop relay cellular network including a Mobile Station (MS), a Base Station (BS), and at least one Relay Station(RS). The method includes measuring, by at least one RS neighboring the MS, quality of a link to the BS, generating link quality information using the measured link quality, and transmitting the link quality information to the MS; and receiving, by the MS, the link quality information from the RSs, selecting an optimal path depending on the received link quality information, and transmitting information on the selected optimal path to the BS.

According to another aspect of the present invention, there is provided a routing method of a Relay Station (RS) in a multi-hop relay cellular network including a Mobile Station (MS), a Base Station (BS), and at least one RS. The method includes detecting a preamble of the BS, and determining a data rate of a BS-RS link from a Signal-to-Interference and Noise Ratio (SINR) of the BS preamble; detecting a preamble of each of neighbor RSs, and determining a data rate of an RS-RS link from an SINR of each of the neighbor RSs; calculating an optimal path's effective data rate for each path from each of the RSs to the BS from information data included in the neighbor RS's preamble; selecting an optimal path among the paths from the RSs to the BS depending on the optimal path's effective data rate, and reporting information on the selected optimal path to the BS; and after reporting the optimal path information to the BS, generating its own preamble with a particular sequence and transmitting the preamble sequence.

According to further another aspect of the present invention, there is provided a routing method of a Mobile Station (MS) in a multi-hop relay cellular network including the MS, a Base Station (BS), and at least one Relay Station (RS). The method includes detecting a preamble of the BS, and determining a data rate of a BS-RS link from a Signal-to-Interference and Noise Ratio (SINR) of the BS preamble; detecting a preamble of each of the RSs, and determining a data rate of an RS-MS link to each of RSs from an SINR of each of the RSs; calculating an optimal path's effective data rate for each path from each of the RSs to the BS from information data included in the RS preamble; and selecting an optimal path among the paths from the RSs to the BS depending on the optimal path's effective data rate, and reporting information on the selected optimal path to the BS.

According to yet another aspect of the present invention, there is provided a routing apparatus in a multi-hop relay cellular network including a Mobile Station (MS), a Base Station (BS), and at least one Relay Station (RS). The apparatus includes at least one RS for measuring quality of a link to the BS, generating link quality information using the measured link quality, and transmitting the link quality information to the MS.

According to still another aspect of the present invention, there is provided a routing apparatus in a multi-hop relay cellular network including a mobile station (MS), a base station (BS), and at least one relay station (RS). The apparatus includes the MS for receiving link quality information generated through measurement of quality of a link from each of the RSs to the BS, selecting an optimal path to the BS using the link quality information, and transmitting information on the selected optimal path to the BS.

## BRIEF DESCRIPTION OF THE DRAWINGS

The above and other objects, features and advantages of the present invention will become more apparent from the following detailed description when taken in conjunction with the accompanying drawings in which:

FIGs. 1A and 1B are schematic diagrams to illustrate problems of the RS received signal-based reporting scheme in a general multi-hop relay cellular network;

FIG. 2 is a diagram illustrating an exemplary frame format in an OFDMA/TDD system supporting a multi-hop relay scheme according to the present invention;

FIG. 3 is a flowchart schematically illustrating an operation of an RS for performing a function according to the present invention; and

FIG. 4 is a flowchart schematically illustrating an operation of an MS for performing a function according to the present invention.

## DETAILED DESCRIPTION OF PREFERRED EMBODIMENTS

Preferred embodiments of the present invention will now be described in detail with reference to the annexed drawings. In the following description, a detailed description of known functions and configurations incorporated herein has been omitted for clarity and conciseness.

The present invention provides a routing method for selecting an optimal path while minimizing a message load in a multi-hop relay cellular network.

In the present invention, a Relay Station (RS) transmits a specific control signal, for example, a preamble signal or a pilot signal, to a plurality of neighbor Mobile Stations (MSs) in order to allow the neighbor MSs to recognize the existence thereof. In addition, the RS transmits information indicating the quality of the optimal path to a Base Station (BS) to the MS along with the control signal, i.e., its preamble. Then the MS, receiving the RS preamble, can recognize the RS through the received preamble, and can also be aware of a channel quality value of the path connected from the RS to the BS.

Therefore, the MS can estimate a channel quality value of a multi-hop path connected from the MS to the BS via the RS through detection of the RS preamble. In this manner, the MS can determine optimal RSs by selecting only the RSs having high channel quality among a plurality of neighbor RSs, i.e., by selecting only the RSs, channel quality values of whose detected preambles are greater than or equal to a threshold previously set in the system. The MS can determine the optimal path while minimizing its message report load, by transmitting only the information on the determined optimal RSs to the BS. Alternatively, the MS may determine the optimal RS by selecting only one RS having the best channel quality value among a plurality of neighbor RSs, and transmit the corresponding information.

With reference to the accompanying drawings, a description will first be made of problems of the prior art, and a description will next be made of a preferred embodiment of the present invention which solves the problems of the prior art.

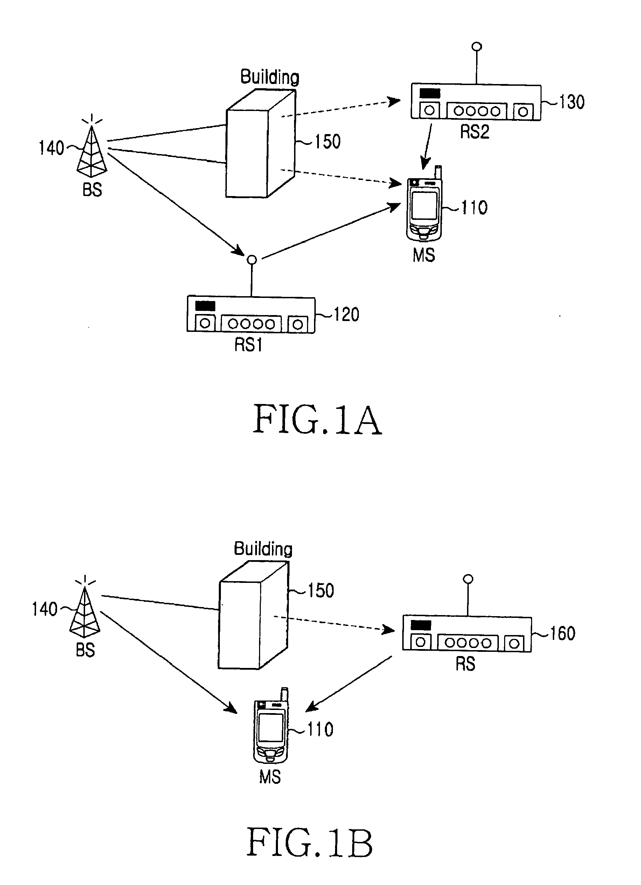

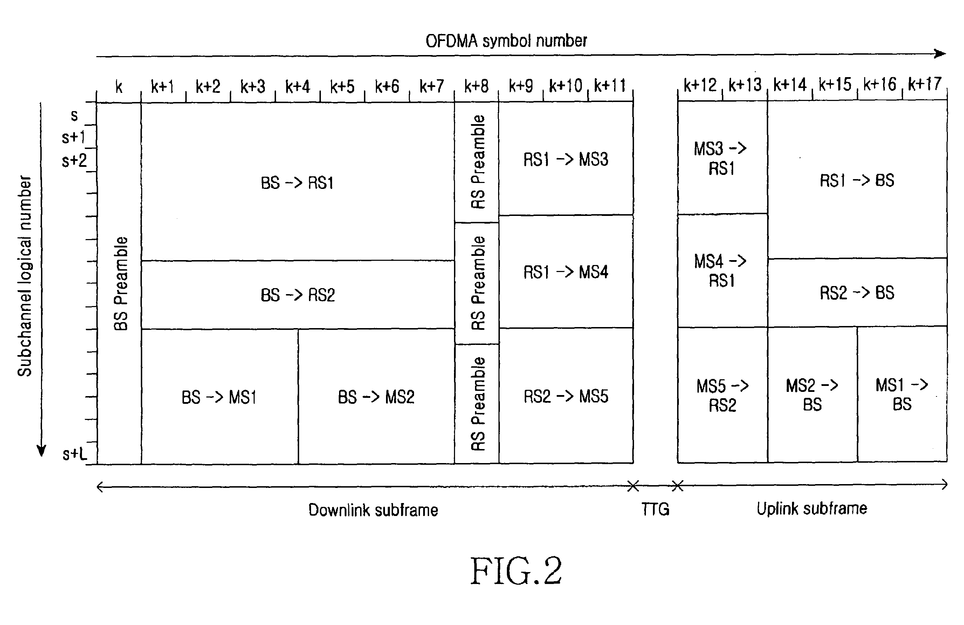

The simplest method capable of solving the high-report load problem of the prior art, occurring when an MS delivers link quality information of all its neighbor RSs to the BS, is a method in which the MS reports information only on several RSs having the highest signal quality received to the BS. However, there is a problem that cannot be solved even with the use of this method. For example, the MS cannot be aware of the BS-RS link quality. This problem will be described with reference to FIGs. 1 and 2.

FIGs. 1A and 1B are schematic diagrams for a description of problems of the RS received signal-based reporting scheme in a general multi-hop relay cellular network.

FIG. 1A illustrates an exemplary problem in which an MS 110 cannot find an optimal path when it reports information only on the RSs having the highest signal quality received among a plurality of RSs, for example, an RS 1 120 and an RS2 130, to minimize a load of a message for reporting to a BS 140.

In FIG. 1A, the MS 110 selects only the RSs, SINRs of whose preambles are highest, and reports the selected RSs to the BS 140. As illustrated in FIG. 1A, the RS1 120 and the RS2 130 are located in the vicinity of the MS 110. It is assumed that a BS(140)-MS(110) link and a BS(140)-RS2(130) link have very low SINRs because of building shielding caused by a particular building 150, and a BS(140)-RS1(120) link has a high SINR. In addition, it is assumed that because the RS2 130 is located closer to the MS 110, the RS2 130 has a higher received signal strength than the RS 1 120, for example, the SINR.

However, because the SINR of the BS(140)-RS2(130) link has a very low SINR, a BS(140)-RS1(120)-MS(110) path is superior to a BS(140)-RS2(130)-MS(110) path in terms of SNIR performance of the full path. In this case, the MS 110 may report the RS2 130 as an optimal RS based on only the received signal strength of the RS2 130, without knowing the SINR performance of the full path. Therefore, the BS 140 determines the BS(140)-RS2(130)-MS(110) path reported by the MS 110 as an optimal path, even though the BS(140)-RS1(120)-MS(110) path is actually the optimal path.

FIG. 1B illustrates another exemplary problem which may arise as an MS 110 cannot be aware of the BS(140)-RS(160) link quality.

In FIG. 1B, the MS 110 is located closer to the BS 140, as compared with the RS 160. In addition, because of the building shielding caused by the building 150 in the BS(140)-RS(160) link, the BS(140)-RS(160)-MS(110) path is inferior to a BS(140)-MS(110) direct path in terms of the full SINR performance. Therefore, it is assumed that although the MS 110 reports information on the RS 160 to the BS 140, the MS 110 basically transmits the BS(140)-MS(110) path quality information to the BS 140. Herein, because the optimal path is the BS(140)-MS(110) direct path, the information on the RS 160, reported by the MS 110, is meaningless.

In this case, if the MS 110 can be aware of the BS(140)-RS(160) link quality, the MS 110 can recognize that the BS(140)-RS(160)-MS(110) path is inferior to the BS(140)-MS(110) direct path in terms of the full SINR performance. In conclusion, the MS 110 has no need to report the information on the RS 160 to the BS 140, contributing to a reduction in its message load.

Herein, the present invention provides a routing technology capable of solving the high-message load problem of the prior art and also solving the difficulty in selecting the optimal path of the prior art. In addition, the present invention provides a routing technology for maximizing a data rate for efficient data transmission, and minimizing power consumption due to the message transmission in the MS or RS.

In the routing technology provided by the present invention, multiple RSs neighboring a particular MS transmit performance information of a link to a BS to the MS along with a specific control signal, for example, a pilot signal or a preamble signal, thereby providing the RS-BS link performance information to the MS. A description will now be made of an RS preamble format transmitted by the RS and a transmission method thereof according to the present invention.

Herein, the present invention will be described with reference to a wireless communication system using Time Division Duplex (TDD) and Orthogonal Frequency Division Multiple Access (OFDMA). However, the present invention is not limited thereto, and can also be applied to all communication systems using other multiple access schemes. In addition, although the present invention will be described with reference to a multi-hop relay cellular network, it can also be applied to all communication systems supporting communication between nodes being fixed, or between nodes having mobility, i.e., RSs orMS.

FIG. 2 is a diagram illustrating an exemplary frame format in an OFDMA/TDD system supporting a multi-hop relay scheme according to the present invention.

Referring to FIG. 2, the horizontal axis, a time axis, represents OFDMA symbol numbers, and the vertical axis, a frequency axis, represents subchannel logical numbers. The frame of FIG. 2 is divided into an uplink subframe and a downlink subframe. Data bursts for a BS-MS link are allocated to each subframe. In addition, a particular frequency-time domain can be allocated for an RS-MS link. As shown in FIG. 2, data bursts transmitted from an RS to an MS are allocated in the downlink subframe, and data bursts transmitted from an MS to an RS are allocated in the uplink subframe.

A particular frequency-time domain of the downlink subframe can be allocated for transmission of a preamble of the RS. The preamble transmission domain of the RS can be separately designated for each individual RS. Alternatively, when a preamble of each RS is distinguished with a particular sequence, RSs can transmit their unique preambles in the same frequency-time domain. When the preamble of each RS is distinguished with the particular sequence as stated above, it is assumed that the RSs are located in the same cell area.

FIG. 2 illustrates an exemplary case where a full subcarrier band is divided into 3 preamble subchannels in one downlink OFDMA symbol interval for RS preamble transmission, and each RS transmits its unique preamble sequence in a designated preamble subchannel band.

In transmitting the preambles shown in FIG. 2, the present invention transmits not only an RS identifier (ID) for identifying each of RSs but also quality information of a BS-RS link along with each RS preamble. With the use of this method, an MS that has successfully received the preamble can be aware of the corresponding BS-RS link quality information.

A description will now be made of an exemplary method in which the RS transmits quality information of the BS-RS link through the RS preamble.

The RS generates a transmission preamble with a particular sequence such that an MS receiving the preamble can recognize the corresponding RS that transmitted the preamble. For example, a pseudo noise (PN) code, an orthogonal code, or a mixture of the PN code and the orthogonal code can be used as the preamble sequence. That is, each subcarrier used as a preamble carries a corresponding PN code value, a corresponding orthogonal code value, or a product of the corresponding PN code value and the corresponding orthogonal code value.

In the general OFDMA mobile communication system, a beginning part of a downlink subframe is occupied by a preamble signal composed of a unique sequence of a BS. The primary purpose of the BS preamble is to rapidly perform initial synchronization of an MS. A PN code can be used as the preamble sequence, and each BS uses its unique PN code. The PN code of the BS preamble can be used as a PN code of an RS preamble. If the RS preamble is smaller in size than the BS preamble, the PN code of the RS preamble can be obtained by taking only a part of the PN code of the RS preamble.

The reason for designing the PN code of the RS preamble in association with the PN code of the BS preamble is to allow the MS to distinguish the BS connected to the RS when it receives and detects the RS preamble. That is, RSs located in the same cell use the PN code of the same RS preamble. In this case, the RSs located in the same cell are distinguished using an orthogonal code. A part of the orthogonal code corresponds to an ID of each RS, and the remaining part of the orthogonal code is used for delivering quality information of the BS-RS link.

The format of the RS preamble sequence departs from a scope of the present invention, so a detailed description of a method for generating the RS preamble sequence will be omitted herein. That is, it should be noted that the method for generating the RS preamble is a mere example according to the present invention, and the present invention is characterized by transmitting not only an RS ID but also quality information of the BS-RS link along with the RS preamble.

Next, a detailed description will be made of a method in which the RS determines a quality information value of the BS-RS link, and a method in which the MS receives the BS-RS quality information value and selects an optimal path depending on the received BS-RS quality information value. For convenience, a 2-hop relay will first be described, and a generalized relay of 3 hops or more will next be described.

A description will first be made of a method for determining a quality information value of a BS-RS link, included in the RS preamble, for the 2-hop relay.

That is, the RS measures signal strength received from the BS, for example, received signal strength using a BS preamble or a BS pilot tone signal, and estimates a channel quality value using the measured received signal strength. Herein, the channel quality value includes an SINR value or an RSSI value that can be estimated through measurement of the received signal strength. Subsequently, the RS reports the estimated channel quality value to the BS over the uplink channel. In addition, the RS determines a BS-RS link quality information value to be transmitted through, for example, its own RS preamble. For example, in order to determine the BS-RS link quality information value, the RS determines a Modulation and Coding Scheme (MCS) level value mapped to the received SINR of the BS, and selects an index of a BS-RS link quality information value mapped to the determined MCS level value. Table 1 below shows the MCS levels, and indexes and received SINR values of the BS-RS link quality information values mapped to the MCS level values.

**Table 1**

| Info Data Index | MCS Level | | | SINR, $\gamma$ |
|---|---|---|---|---|
| | Modulation | FEC rate | Data Rate, R (bits/symbol) | |
| 0 | N/A | N/A | 0 | $\gamma < A_0$ |
| 1 | QPSK | 1/8 | 1/4 | $A_0 \leq \gamma < A_1$ |
| 2 | QPSK | 1/4 | 1/2 | $A_1 \leq \gamma < A_2$ |
| 3 | QPSK | 1/3 | 2/3 | $A_2 \leq \gamma < A_3$ |
| 4 | QPSK | 2/5 | 4/5 | $A_3 \leq \gamma < A_4$ |

(continued)

| Info Data Index | MCS Level | | | SINR, $\gamma$ |
|---|---|---|---|---|
| | Modulation | FEC rate | Data Rate, R (bits/symbol) | |
| 5 | QPSK | 1/2 | 1 | $A_4 \leq \gamma < A_5$ |
| 6 | QPSK | 2/3 | 4/3 | $A_5 \leq \gamma < A_6$ |
| 7 | QPSK | 3/4 | 3/2 | $A_6 \leq \gamma < A_7$ |
| 8 | QPSK | 5/6 | 5/3 | $A_7 \leq \gamma < A_8$ |
| 9 | QAM | 1/2 | 2 | $A_8 \leq \gamma < A_9$ |
| 10 | QAM | 2/3 | 8/3 | $A_9 \leq \gamma < A_{10}$ |
| 11 | QAM | 3/4 | 3 | $A_{10} \leq \gamma < A_{11}$ |
| 12 | QAM | 5/6 | 10/3 | $A_{11} \leq \gamma < A_{12}$ |
| 13 | 64QAM | 2/3 | 4 | $A_{12} \leq \gamma < A_{13}$ |
| 14 | 64QAM | 3/4 | 9/2 | $A_{13} \leq \gamma < A_{14}$ |
| 15 | 64QAM | 5/6 | 5 | $A_{14} \leq \gamma$ |

Table 1 is an exemplary mapping table showing a mapping relation between indexes (information data indexes) and MCS levels (Modulation, Forward Error Correction (FEC) Rates, Data Rates) of the BS-RS link quality information values, and their associated received SINR values. Referring to Table 1, the BS-RS link quality is divided into 16 levels, and they are assigned their unique indexes of 0 to 15. The index '0' indicates that the relay function cannot be performed because the received SINR from the BS is too low. Although it is assumed that the RS previously receives the mapping table of Table 1 from the BS and stores the received mapping table, the present invention is not limited thereto. Alternatively, the mapping table can also be previously stored in the MS.

Next, a description will be made of a method in which the MS, receiving the RS preamble, selects an optimal path.

The MS receives an RS preamble from the RS, and detects the received RS preamble. That is, the MS can determine a subchannel index and an orthogonal code index, used by the RS, through the detection of the received RS preamble. The MS distinguishes each RS signal using the detection result, for example, through combination of the RS preamble subchannel index and an orthogonal code index.

More specifically, the MS can measure an SINR of a preamble received from the RS, and can also determine quality, i.e., a data rate $R_2$, of the RS-MS link using the mapping table shown in Table 1. Subsequently, the MS extracts a BS-RS link quality information value index transmitted through the RS preamble, and compares the extracted BS-RS link quality information value index with the mapping table shown in Table 1. Through the comparison, the MS can determine a data rate $R_1$ of the BS-RS link. Thereafter, the MS calculates an effective data rate E using the data rate $R_1$ and the data rate $R_2$. The effective data rate E can be defined as set forth in Equation (1):

$$E = \frac{1}{1/R_1 + 1/R_2} \qquad \ldots \ldots \ldots \ldots (1)$$

An effective data rate E of a path connected from the BS to the MS via the RS can be calculated by substituting the data rate $R_1$ and the data rate $R_2$ in Equation (1). Subsequently, the MS selects an RS having the highest effect data rate E as an optimal RS.

Next, the MS reports an ID of the RS selected through the calculation of the effective data rate E, to the BS. That is, the MS reports an RS preamble subchannel index and an orthogonal code index mapped to the selected RS ID, and a received SINR value of the RS, to the BS. Then the BS finally selects an optimal path based on the values reported by the MS.

In the present invention, in order to increase reliability of the optimal path selection, the MS may report information on not only the RS having the highest effective data rate E but also a small number of RSs having a higher effective data rate E, to the BS. The number of RSs, whose information is reported to the BS, can be previously determined by the BS. The finally determined optimal path of the MS can also be determined by the BS.

As described above, the path selection technique of the present invention can select an optimal path while minimizing a message load.

Next, for a generalized relay of 3 hops or more, a description will be made of a method in which the RS determines a quality information value of the BS-RS link, and a method in which the MS selects an optimal path using the received BS-RS quality information value.

The path selection technique used for the 2-hop relay can also be applied to the relay of 3 hops or more. That is, each RS or MS can calculate an effective data rate E from received SINRs and information data values of preambles received from neighbor RSs using Equation (1), like in the 2-hop relay. For convenience, it will be assumed herein that the reception from the neighbor RSs is performed by the RS. Next, the RS selects the optimal path up to the BS, including the direct path of the BS, based on the effective data rate E calculated through Equation (1). Herein, the effective data rate E of the BS direct path is equal to a data rate mapped to the received SINR from the BS.

Next, the RS, after selecting the optimal path through the effective data rate E, reports information on the selected optimal path to the BS. Thereafter, the RS receives a confirmation of the information on the finally determined optimal path from the BS. Herein, the final confirmation procedure of the BS can be omitted according to the system design. In this case where the final confirmation procedure of the BS is omitted, selection of the optimal path is managed by the RS.

Next, the RS selects an information value index indicating link quality of the path from the RS to the BS, depending on the mapping table shown in Table 1 based on the effective data rate E of the selected optimal path. Subsequently, the RS determines a link quality information value mapped to the selected information value index, and then transmits the determined link quality information value to another RS or MS in the path along with the RS preamble. Then another RS or MS, receiving the RS preamble, repeats the foregoing operation. Therefore, even though the number of hops increases, each RS or MS can select the optimal path to the BS using the foregoing path selection method.

Each RS or MS calculating the optimal path is unaware of the number of hops constituting the optimal path of the previous RS. However, because every RS and MS reports information on its selected optimal path to the BS, the BS can have optimal path information of all RSs and MSs.

An effective data rate E in the 3-hop path can be defined as Equation (2):

$$E_3 = \frac{1}{1/R_3 + 1/E_2} = \frac{1}{1/R_3 + 1/R_2 + 1/R_1} \qquad \dots\dots\dots(2)$$

Equation (2) represents an exemplary method in which the MS calculates an effective data rate E in a 3-hop path composed of, for example, RS 1, RS2 and MS. It is assumed herein that the optimal path from the RS2 to the BS is a BS-RS1-RS2 path. In Equation (2), a data rate of the BS-RS1 link is represented by $R_1$, a data rate of the RS1-RS2 link is represented by $R_2$, and a data rate of the RS2-MS link is represented by $R_3$. In addition, an effective data rate of the optimal path in the RS2, for example, the BS-RS1-RS2 path, is represented by $E_2$, and an effective data rate in the MS, for example, the BS-RS1-RS2-MS path, is represented by $E_3$.

Equation (2) represents an expression for an effective data rate $E_3$ of the BS-RS1-RS2-MS path calculated in the MS. The MS can determine the data rate $R_3$ from the SINR value of the received RS2 preamble, and determine an effective data rate $E_2$ in the RS2 from the information data value included in the received RS2 preamble. The effective data rate $E_2$ is given as 1 ($1/R_2 + 1/R_1$), and the effective data rate $E_2$ is a value that the RS2 transmitted along with its own RS preamble. In this manner, the MS can calculate an effective data rate of a multi-hop path composed of 3 hops. Therefore, the MS can select an optimal multi-hop path, including a 3-hop path.

As described above, the effective data rate of the multi-hop path according to the present invention can be defined as Equation (3) below. That is, Equation (3) represents a generalized effective data rate of a multi-hop path composed of N hops.

$$E_N = \frac{1}{\sum_{n=1}^{N} 1/R_n} \qquad \dots\dots\dots\dots(3)$$

In Equation (3), $R_n$ denotes a data rate of a link between an RS(n-1) and an RS(n), where $R_1$ denotes a data rate of a link between a BS and an RS1.

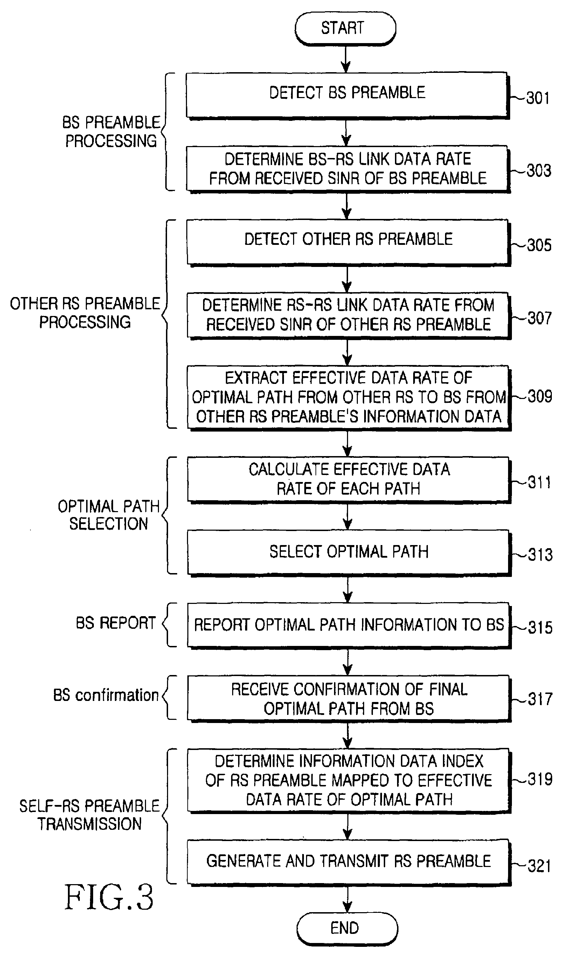

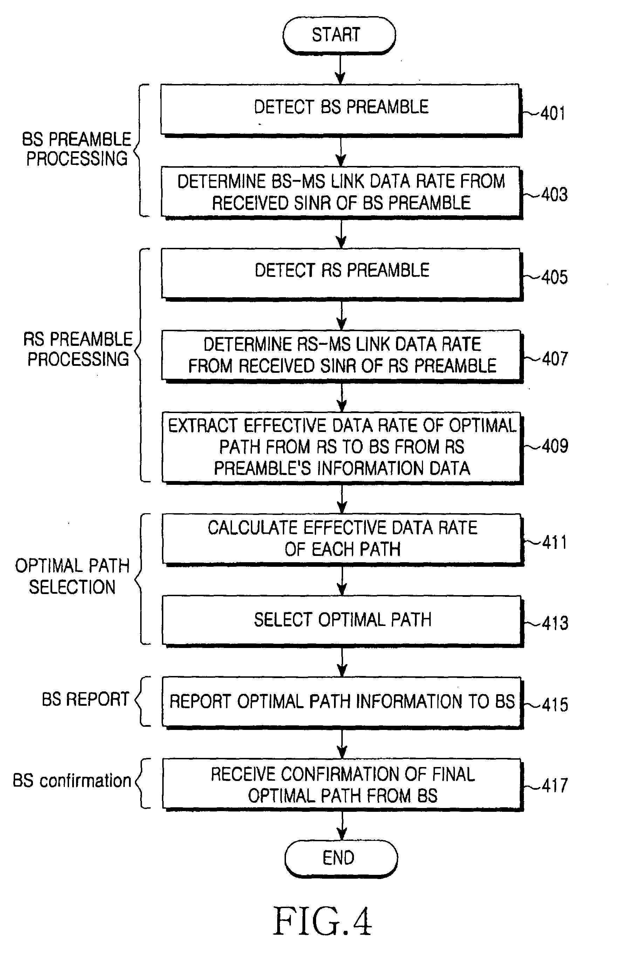

With reference to FIGs. 3 and 4, a description will now be made of operations of an RS and an MS for performing the foregoing functions of the present invention.

FIG. 3 is a flowchart schematically illustrating an operation of an RS for performing a function according to the present invention.

Referring to FIG. 3, an operation of the RS can be roughly divided into a BS preamble processing process (steps 301 and 303), an other-RS preamble processing process (steps 305 to 309), an optimal path selection process (steps 311 and 313), a BS report process (step 315), a BS confirmation process (step 317), and a self-RS preamble transmission process (steps 319 and 321).

As illustrated in FIG. 3, in step 301, the RS detects a BS preamble. In step 303, the RS measures the BS preamble's received SINR in the detected BS preamble, and determines a data rate of a BS-RS link from the BS preamble's received SINR. In step 305, the RS detects other neighbor RSs' preambles. In step 307, the RS measures the other RSs' preambles received SINRs in the detected other RSs' preambles, and determines a data rate of an RS-RS link from the other RSs' preambles received SINRs. Next, in step 309, the RS extracts an effective data rate for an optimal path from the other RS to the BS from the information data value included in the other RSs' preambles.

In step 311, the RS calculates an effective data rate of each path using Equation (1) or Equation (2). In step 313, the RS selects an optimal path based on the value calculated in step 311. In step 315, the RS reports information on the selected optimal path, for example, RS subchannel index, orthogonal code index and received SINR, to the BS. In step 317, the RS receives a confirmation of the finally determined optimal path from the BS. As described above, step 317 may be omitted according to the system design.

Next, in step 319, the RS determines an information data index of an RS preamble mapped to the effective data rate of the selected optimal path. In step 321, the RS generates an RS preamble mapped to the determined information data index of the RS preamble, and transmits the generated RS preamble on a broadcast basis.

FIG. 4 is a flowchart schematically illustrating an operation of an MS for performing a function according to the present invention.

Referring to FIG. 4, an operation of the MS can be roughly divided into a BS preamble processing process (steps 401 and 403), an RS preamble processing process (steps 405 to 409), an optimal path selection process (steps 411 and 413), a BS report process (step 415), and a BS confirmation process (step 417).

The MS does not perform the relay function of the RS shown in FIG. 3. Therefore, as shown in FIG. 4, the overall operation of the MS can be similar to the operation of the RS shown in FIG. 3 except for the step of generating and transmitting the RS preamble in the operation of the RS. Similarly, the MS processes a BS preamble in steps 401 and 403, and processes an RS preamble in steps 405 to 409. Next, the MS selects an optimal path in steps 411 and 413, and reports information of the selected optimal path to the BS in step 415. Finally, the MS receives a confirmation of the finally determined optimal path from the BS in step 417. Herein, step 417 can be omitted according to the system design.

More specifically, in step 401, the MS detects a BS preamble. In step 403, the MS measures the BS preamble's received SINR in the detected BS preamble, and determines a data rate of a BS-MS link from the BS preamble's received SINR. In step 405, the MS detects its neighbor RS's preamble. In step 407, the MS measures the RS preamble's received SINR in the detected RS preamble, and determines a data rate of an RS-MS link from the RS preamble's received SINR. Next, in step 409, the MS extracts an effective data rate for an optimal path from the RS to the BS from the information data value included in the RS preamble.

In step 411, the MS calculates an effective data rate of each path using Equation (1) or Equation (2). In step 413, the MS selects an optimal path based on the value calculated in step 411. In step 415, the MS reports information on the selected optimal path, for example, RS subchannel index, orthogonal code index and received SINR, to the BS. In step 417, the MS receives a confirmation of the finally determined optimal path from the BS. As described above, step 417 may be omitted according to the system design.

As described above, the present invention provides a routing method for selecting an optimal path while minimizing a message load in a multi-hop relay cellular network. In this routing method, the RS transmits a preamble to allow neighbor MS to recognize the existence thereof, and also transmits information indicating quality of the optimal path to the BS along with the RS preamble. Then the MS receiving the RS preamble can not only recognize the BS, but also determine the channel quality value of the path connected from the RS to the BS.

Therefore, the MS can estimate a channel quality value of a multi-hop path connected from the MS to the BS via the RS through the RS preamble detection. In this manner, the MS can determine an optimal RS. The MS transmits only the determined optimal RS information to the BS, making it possible to find the optimal path while minimizing its message load.

As can be understood from the foregoing description, according to the present invention, an RS transmits quality information of a link between the RS and a BS to an MS along with a preamble signal or a pilot signal, providing the RS-BS link quality information to the MS. In this way, the MS can select an optimal path by itself. In addition, the MS reports information only on its selected optional RS to the BS, thereby solving the high-uplink load problem and also solving the difficulty in selecting the optimal path.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A routing method in a multi-hop relay cellular network including a Mobile Station (MS), a Base Station (BS), and at least one Relay Station (RS), the method comprising the steps of:

   measuring, by at least one RS neighboring the MS, quality of a link to the BS, generating link quality information using the measured link quality, and transmitting the link quality information to the MS; and
   receiving, by the MS, the link quality information from the RSs, selecting an optimal path depending on the received link quality information, and transmitting information on the selected optimal path to the BS.

2. The routing method of claim 1, further comprising, upon receiving the optimal path information transmitted by the MS, determining, by the BS, an optimal BS-RS-MS path depending on the received optimal path information, and transmitting information on the determined optimal BS-RS-MS path to the MS.

3. The routing method of claim 1, wherein the optimal path information includes information on at least one RS, having an optimal path predetermined based on the optimal path.

4. The routing method of claim 1, wherein the step of generating link quality information by the RS further comprises measuring a received signal strength using a preamble signal from the BS or at least one neighbor RS, estimating a channel quality value through the measurement of the received signal strength, and generating link quality information using the estimated channel quality value.

5. The routing method of claim 1, wherein the step of generating link quality information by the RS further comprises measuring a received signal strength using a pilot signal from one of the BS or at least one neighbor RS, estimating a channel quality value through the measurement of the received signal strength, and generating link quality information using the estimated channel quality value.

6. The routing method of claim 1, wherein the link quality information includes information on an optimal path from the RS to the BS.

7. The routing method of claim 1, further comprising transmitting the link quality information from each of the RSs to the MS through a preamble signal.

8. The routing method of claim 7, wherein the preamble signal further includes identifier information of a corresponding RS.

9. The routing method of claim 1, further comprising transmitting the link quality information from each of the RSs to the MS through a pilot signal.

10. The routing method of claim 1, further comprising measuring, by the MS, a Signal-to-Interference and Noise Ratio (SINR) depending on the received link quality information, and estimating a link quality between the MS and each of the RSs.

11. The routing method of claim 1, further comprising measuring, by the MS, a Received Signal Strength Indicator (RSSI) depending on the received link quality information, and estimating a link quality between the MS and each of the RSs.

12. The routing method of claim 1, wherein the MS acquires a channel quality value of a multi-hop path to each of the RSs connected thereto and the BS based on the received link quality information.

13. The routing method of claim 1, wherein the RS determines a Modulation and Coding Scheme (MCS) level value mapped to a received signal strength, selects an index of a BS-RS link quality information value according to the determined MCS level value, and determines a BS-RS link quality information value according to the selected index of the link quality information value.

**14.** The routing method of claim 13, wherein the MCS level value, the index of the BS-RS link quality information value, and the SINR are determined using a predetermined mapping table.

**15.** The routing method of claim 1, wherein the step of selecting an optimal path by the MS further comprises:

calculating an optimal path's effective data rate for each path from the MS to the BS according to the received link quality information; and
selecting an optimal path among the paths from the RSs to the BS depending on the calculated optimal path's effective data rate.

**16.** The routing method of claim 15, wherein the effective data rate is calculated by

$$E = \frac{1}{1/R_1 + 1/R_2}$$

where $R_1$ denotes a data rate of a BS-RS link, $R_2$ denotes a data rate of an RS-MS link, and E denotes an effective data rate of a path connected from the BS to the MS via a first RS (RS 1).

**17.** The routing method of claim 15, wherein the effective data rate is calculated by

$$E_3 = \frac{1}{1/R_3 + 1/E_2} = \frac{1}{1/R_3 + 1/R_2 + 1/R_1}$$

where $R_1$ denotes a data rate of a BS-RS 1 link, $R_2$ denotes a data rate of an RS1-RS2 link, $R_3$ denotes a data rate of an RS2-MS link, $E_3$ denotes an effective data rate of a BS-RS1-RS2-MS path, and $E_2$ denotes an effective data rate in the second RS (RS2).

**18.** The routing method of claim 15, wherein the effective data rate is calculated by

$$E_N = \frac{1}{\sum_{n=1}^{N} 1/R_n}$$

where $R_n$ denotes a data rate of an RS(n-1)-RS(n) link, and $E_N$ denotes an effective data rate of a BS-RS(n-1)-RS(n)-MS path.

**19.** A routing method of a Relay Station (RS) in a multi-hop relay cellular network including a Mobile Station (MS), a Base Station (BS), and at least one RS, the method comprising the steps of:

detecting a preamble of the BS, and determining a data rate of a BS-RS link from a Signal-to-Interference and Noise Ratio (SINR) of the BS preamble;
detecting a preamble of each of neighbor RSs, and determining a data rate of an RS-RS link from an SINR of each of the neighbor RSs;
calculating an optimal path's effective data rate for each path from each of the RSs to the BS from information data included in the neighbor RSs' preamble;
selecting an optimal path among the paths from the RSs to the BS depending on the optimal path's effective data rate, and reporting information on the selected optimal path to the BS; and
after reporting the optimal path information to the BS, generating its own preamble with a particular sequence and transmitting the preamble sequence.

20. The routing method of claim 19, further comprising, after reporting the optimal path information to the BS, receiving a confirmation of the final optimal path information from the BS.

21. The routing method of claim 19, wherein the step of generating and transmitting a preamble comprises determining an information data index of an RS preamble mapped to the optimal path's effective data rate, generating an RS preamble according to the determined information data index, and transmitting the generated RS preamble.

22. The routing method of claim 19, wherein the preamble sequence includes at least one of a Pseudo Noise (PN) code and an orthogonal code;
wherein each subcarrier used as the preamble includes therein one of a corresponding PN code value and an orthogonal code value, or a product of the PN code value and the corresponding orthogonal code value.

23. The routing method of claim 19, wherein the step of determining a quality information value of a BS-RS link, included in the RS preamble, comprises:

measuring a signal strength received from the BS using the BS preamble;
extracting a quality value of a channel to the BS using the measured signal strength, and reporting the extracted channel quality value to the BS;
determining a Modulation and Coding Scheme (MCS) level value mapped to a received Signal-to-Interference and Noise Ratio (SINR) of the BS using a predetermined mapping table, and selecting an index of an BS-RS link quality information value mapped to the determined MCS level value; and
determining a BS-RS link quality information value to be transmitted through its own RS preamble using the MCS level value and the index of the link quality information value.

24. The routing method of claim 23, wherein the RS previously receives the mapping table from the BS.

25. The routing method of claim 19, wherein the effective data rate is calculated by

$$E = \frac{1}{1/R_1 + 1/R_2}$$

where $R_1$ denotes a data rate of a BS-RS 1 link, $R_2$ denotes a data rate of an RS1-RS2 link, and E denotes an effective data rate of a path connected from the BS to the second RS (RS2) via the first RS (RS 1).

26. The routing method of claim 19, wherein the effective data rate is calculated by

$$E_3 = \frac{1}{1/R_3 + 1/E_2} = \frac{1}{1/R_3 + 1/R_2 + 1/R_1}$$

where $R_1$ denotes a data rate of a BS-RS 1 link, $R_2$ denotes a data rate of an RS 1-RS2 link, $R_3$ denotes a data rate of an RS2-RS3 link, $E_3$ denotes an effective data rate of a BS-RS1-RS2-RS3 path, and $E_2$ denotes an effective data rate in the second RS (RS2).

27. The routing method of claim 19, wherein the effective data rate is calculated by

$$E_N = \frac{1}{\sum_{n=1}^{N} 1/R_n}$$

where $R_n$ denotes a data rate of an RS(n-1)-RS(n) link, and $E_N$ denotes an effective data rate of a BS-RS(n-1)-RS(n) path.

28. The routing method of claim 19, wherein the RS reports to the BS an identifier of a neighbor RS selected through the calculation of the effective data rate, an RS preamble subchannel index mapped to the RS identifier, an orthogonal code index, and a received SINR of the RS.

29. The routing method of claim 19, wherein the RS reports, to the BS, information on at least one predetermined neighbor RS having a high effective data rate based on the effective data rate.

30. The routing method of claim 19, wherein the number of neighbor RSs reported to the BS is previously determined by the BS.

31. A routing method of a Mobile Station (MS) in a multi-hop relay cellular network including the MS, a Base Station (BS), and at least one Relay Station (RS), the method comprising the steps of:

   detecting a preamble of the BS, and determining a data rate of a BS-RS link from a Signal-to-Interference and Noise Ratio (SINR) of the BS preamble;
   detecting a preamble of each of the RSs, and determining a data rate of an RS-MS link to each of RSs from an SINR of each of the RSs;
   calculating an optimal path's effective data rate for each path from each of the RSs to the BS from information data included in the RS preamble; and
   selecting an optimal path among the paths from the RSs to the BS depending on the optimal path's effective data rate, and reporting information on the selected optimal path to the BS.

32. The routing method of claim 31, further comprising receiving a confirmation of final optimal path information from the BS, after reporting the optimal path information to the BS.

33. The routing method of claim 31, wherein the MS reports, to the BS, information on at least one predetermined RS having a high effective data rate based on the effective data rate.

34. The routing method of claim 31, wherein the number of RSs reported by the MS is previously determined by the BS.

35. The routing method of claim 31, wherein the effective data rate is calculated by

$$E = \frac{1}{1/R_1 + 1/R_2}$$

where $R_1$ denotes a data rate of a BS-RS link, $R_2$ denotes a data rate of an RS-MS link, and E denotes an effective data rate of a path connected from the BS to the MS via a first RS (RS1).

36. The routing method of claim 31, wherein the effective data rate is calculated by

$$E_3 = \frac{1}{1/R_3 + 1/E_2} = \frac{1}{1/R_3 + 1/R_2 + 1/R_1}$$

where $R_1$ denotes a data rate of a BS-RS1 link, $R_2$ denotes a data rate of an RS1-RS2 link, $R_3$ denotes a data rate of an RS2-MS link, $E_3$ denotes an effective data rate of a BS-RS 1-RS2-MS path, and $E_2$ denotes an effective data rate in the second RS (RS2).

37. The routing method of claim 31, wherein the effective data rate is calculated by

$$E_N = \frac{1}{\sum_{n=1}^{N} 1/R_n}$$

where $R_n$ denotes a data rate of an RS(n-1)-RS(n) link, and $E_N$ denotes an effective data rate of a BS-RS(n-1)-RS(n)-MS path.

38. A routing apparatus in a multi-hop relay cellular network including a Mobile Station (MS), a Base Station (BS), and at least one Relay Station (RS), the apparatus comprising:

at least one RS for measuring quality of a link to the BS, generating link quality information using the measured link quality, and transmitting the link quality information to the MS.

39. The routing apparatus of claim 38, wherein the RS measures a received signal strength using a preamble signal of one of the BS or each of neighbor RSs, estimates a channel quality value through the measurement of the received signal strength, and generates link quality information using the estimated channel quality value.

40. The routing apparatus of claim 39, wherein the RS measures a received signal strength using a pilot signal of one of the BS or each of neighbor RSs, estimates a channel quality value through the measurement of the received signal strength, and generates link quality information using the estimated channel quality value.

41. The routing apparatus of claim 39, wherein the link quality information includes information on an optimal path to the BS.

42. The routing apparatus of claim 39, wherein the RS transmits the link quality information to the MS using at least one of a preamble signal and a pilot signal.

43. The routing apparatus of claim 39, wherein the RS determines a Modulation and Coding Scheme (MCS) level value mapped to the received signal strength, selects an index of a BS-RS link quality information value according to the determined MCS level value, and determines a BS-RS link quality information value according to the selected index of the link quality information value.

44. The routing apparatus of claim 43, wherein the MCS level value, the index of the BS-RS link quality information value, and the SINR are determined using a predetermined mapping table.

45. A routing apparatus in a multi-hop relay cellular network including a Mobile Station (MS), a Base Station (BS), and at least one Relay Station (RS), the apparatus comprising:

the MS for receiving link quality information generated through measurement of quality of a link from each of the RSs to the BS, selecting an optimal path to the BS using the link quality information, and transmitting information on the selected optimal path to the BS.

46. The routing apparatus of claim 45, wherein the MS measures one of a Signal-to-Interference and Noise Ratio (SINR) and a Received Signal Strength Indicator (RSSI) depending on the received link quality information, and estimates quality of a link between the MS and each of the RSs.

47. The routing apparatus of claim 45, wherein the MS acquires a channel quality value of a multi-hop path connected from the MS itself to the RSs and the BS based on the received link quality information.

48. The routing apparatus of claim 45, wherein the MS calculates an optimal path's effective data rate for each path from the MS to the BS based on the received link quality information, and selects an optimal path among the paths from the RSs to the BS based on the optimal path's effective data rate.

49. The routing apparatus of claim 48, wherein the effective data rate is calculated by

$$E = \frac{1}{1/R_1 + 1/R_2}$$

where $R_1$ denotes a data rate of a BS-RS link, $R_2$ denotes a data rate of an RS-MS link, and E denotes an effective data rate of a path connected from the BS to the MS via a first RS (RS1).

**50.** The routing apparatus of claim 48, wherein the effective data rate is calculated by

$$E_3 = \frac{1}{1/R_3 + 1/E_2} = \frac{1}{1/R_3 + 1/R_2 + 1/R_1}$$

where $R_1$ denotes a data rate of a BS-RS1 link, $R_2$ denotes a data rate of an RS1-RS2 link, $R_3$ denotes a data rate of an RS2-MS link, $E_3$ denotes an effective data rate of a BS-RS1-RS2-MS path, and $E_2$ denotes an effective data rate in the second RS (RS2).

**51.** The routing apparatus of claim 48, wherein the effective data rate is calculated by

$$E_N = \frac{1}{\sum_{n=1}^{N} 1/R_n}$$

where $R_n$ denotes a data rate of an RS(n-1)-RS(n) link, and $E_N$ denotes an effective data rate of a BS-RS(n-1)-RS(n)-MS path.

FIG.1A

FIG.1B

FIG.2

START

BS PREAMBLE PROCESSING {

DETECT BS PREAMBLE — 301

DETERMINE BS-RS LINK DATA RATE FROM RECEIVED SINR OF BS PREAMBLE — 303

OTHER RS PREAMBLE PROCESSING {

DETECT OTHER RS PREAMBLE — 305

DETERMINE RS-RS LINK DATA RATE FROM RECEIVED SINR OF OTHER RS PREAMBLE — 307

EXTRACT EFFECTIVE DATA RATE OF OPTIMAL PATH FROM OTHER RS TO BS FROM OTHER RS PREAMBLE'S INFORMATION DATA — 309

OPTIMAL PATH SELECTION {

CALCULATE EFFECTIVE DATA RATE OF EACH PATH — 311

SELECT OPTIMAL PATH — 313

BS REPORT {

REPORT OPTIMAL PATH INFORMATION TO BS — 315

BS confirmation {

RECEIVE CONFIRMATION OF FINAL OPTIMAL PATH FROM BS — 317

SELF-RS PREAMBLE TRANSMISSION {

DETERMINE INFORMATION DATA INDEX OF RS PREAMBLE MAPPED TO EFFECTIVE DATA RATE OF OPTIMAL PATH — 319

GENERATE AND TRANSMIT RS PREAMBLE — 321

END

FIG.3

FIG.4